Europäisches Patentamt

European Patent Office

Office européen des brevets

(11) Numéro de publication: **0 376 834**

**A1**

(12) # DEMANDE DE BREVET EUROPEEN

(21) Numéro de dépôt: **89403638.3**

(22) Date de dépôt: **22.12.89**

(51) Int. Cl.5: **B62D 61/12**

(30) Priorité: **23.12.88 FR 8817118**

(43) Date de publication de la demande:
**04.07.90 Bulletin 90/27**

(84) Etats contractants désignés:
**BE DE ES FR GB IT LU NL**

(71) Demandeur: **S.E.S.R. - SOCIETE EUROPEENNE DE SEMI-REMORQUES**
**44, rue François 1er**
**F-75008 Paris(FR)**

(72) Inventeur: **Larchet, Pierre**
**19, rue Saint Livier**
**F-54130 Saint Max(FR)**
Inventeur: **Léger, Michel**
**8, rue Pacatte, Bât. Les Châtaigniers**
**F-54300 Lunéville(FR)**
Inventeur: **Bonnard, Claude**
**9, place St. Rémy**
**F-54300 Lunéville(FR)**

(74) Mandataire: **Kügele, Bernhard et al**
**NOVAPAT FRANCE 63 bis, boulevard**
**Bessières**
**F-75017 Paris(FR)**

(54) **Dispositif de relevage d'essieu pour véhicule industriel.**

(57) Ce dispositif comprend un étrier (5) suspendu de façon flottante à une traverse (4) du châssis (2) du véhicule et portant entre ses extrémités une plaque (7) perpendiculaire à ses branches. Une console (10) est solidaire de l'essieu (2) à relever et porte entre les branches de l'étrier une seconde plaque (9) espacée au-dessus de la première. Un vérin pneumatique (11) est relié entre les plaques (7, 9).

FIG1

Xerox Copy Centre

## Dispositif de relevage d'essieu pour véhicule industriel.

La présente invention est relative à un dispositif de soulèvement d'essieu pour véhicule industriel poids lourd.

On sait que dans certaines conditions d'utilisation des semi-remorques à trois essieux arrière, il est avantageux de relever l'un de ces essieux pour rouler, afin de réduire l'usure des pneumatiques et de diminuer la résistance à l'avancement provoquée par le contact sol/pneumatique.

On connait déjà différents dispositifs permettant de relever un essieu d'un véhicule industriel; parmi ceux-ci on peut distinguer deux types de dispositifs, savoir :
- les dispositifs dits "latéraux" comportant un organe d'actionnement disposé sur un seul côté du véhicule;
- les dispositifs dits "centraux" comportant un organe d'actionnement agissant entre des bras de suspension.

Parmi les dispositifs de ce second type qui équipent les véhicules comportant des systèmes de suspension hydrauliques, pneumatiques ou oléo-pneumatiques, l'un des plus connus comporte deux consoles formant chacune un angle droit, dont l'une est fixée sur le corps d'essieu et dont l'autre est fixée, au droit de la première et en position inversée, sur une traverse voisine dudit essieu. Entre les parties des consoles se faisant face est disposé un vérin pneumatique dont l'actionnement provoque le relèvement ou l'abaissement de l'essieu, comme décrit par exemple dans la demande de brevet européen n° 0 284 572.

Ce dispositif, dont l'avantage est sa simplicité, présente néanmoins deux inconvénients dont l'un consiste en sa difficulté de montage sur un véhicule existant et dont l'autre est qu'il sollicite la traverse voisine de l'essieu en flexion/torsion.

L'invention a pour but de remédier à ces inconvénients, et elle a pour objet à cet effet un dispositif de relevage d'essieu pour véhicule industriel, du type dit "central" dont l'organe de levage agit entre les bras de la suspension, caractérisé en ce qu'il comprend un étrier suspendu de façon flottante à une traverse solidaire du châssis et portant une plaque entre ses extrémités, perpendiculaire à ses branches, une console solidaire de l'essieu à relever et portant entre les branches de l'étrier une seconde plaque espacée au-dessus de la première et lui faisant face, et un vérin disposé entre lesdites plaques.

D'une façon avantageuse il peut être prévu une seconde console, solidaire de la plaque portée entre les branches de l'étrier, et articulée sur le châssis de façon à osciller par rapport à celui-ci et maintenir l'extrémité inférieure de l'étrier lorsque l'essieu est abaissé à partir de sa position relevée.

On remarquera que cette seconde console ne supporte aucune charge lors du relevage de l'essieu, la charge étant entièrement supportée par ledit étrier.

Suivant une autre caractéristique de l'invention, ledit étrier est rigide et formé à partir d'une forte tige de métal.

Dans une variante, ledit étrier est souple et formé au moyen d'un câble d'acier.

Suivant la source d'énergie utilisée sur le véhicule et/ou son type de suspension, le vérin est hydraulique ou pneumatique.

Dans un autre mode de réalisation, le vérin est un vérin mécanique.

Sur un véhicule équipé d'une suspension pneumatique, le vérin est avantageusement constitué par un soufflet en matière élastomère alimenté par la source de fluide sous pression du véhicule qui alimente la suspension.

La description qui va suivre, en regard des dessins annexés à titre d'exemples non limitatifs, permettra de bien comprendre comment la présente invention peut être mise en pratique.

La figure 1 est une vue schématique partielle en élévation latérale du dispositif de relevage d'essieu suivant l'invention appliqué à un véhicule industriel du type à suspension pneumatique, l'essieu étant en position relevée.

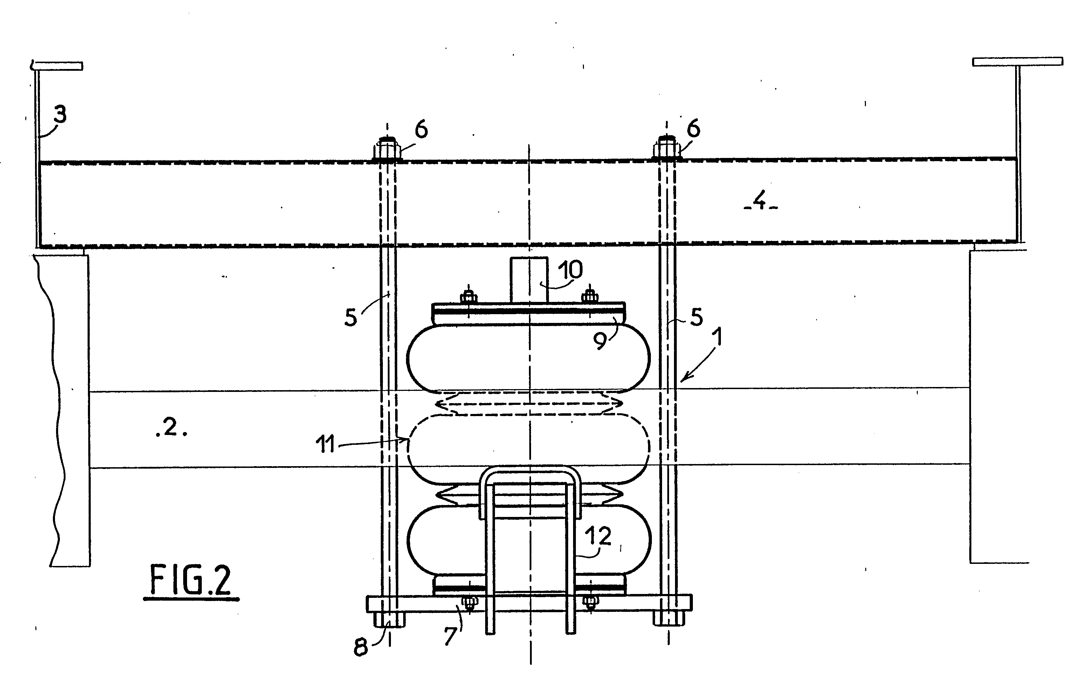

La figure 2 en est une vue analogue dans le sens de la flèche F de la figure 1.

En se référant aux dessins, on a représenté un dispositif de relevage d'essieu, désigné dans son ensemble par la référence 1, dans lequel un essieu 2 est monté mobile par rapport au châssis du véhicule comportant par exemple deux longerons 3.

Entre les longerons 3 est fixée une entretoise transversale 4 à travers laquelle s'étendent, de haut en bas, suivant l'exemple de réalisation représenté, deux tiges métalliques 5, qui sont montées flottantes, c'est-à-dire qu'elles sont disposées dans des trous surdimensionnés par rapport au diamètre des tiges 5 afin de permettre à celles-ci un certain débattement en oscillation.

Les tiges 5 sont filetées à leurs extrémités et sont arrêtées à leurs extrémités supérieures par des écrous 6.

Les tiges 5 s'étendent à travers des trous prévus aux extrémités d'une plaque 7, perpendiculaire auxdites tiges et retenue sur celles-ci par des écrous 8, formant ainsi un étrier pouvant osciller sur la traverse 4 dans la mesure permise par le jeu des tiges 5 dans celle-ci.

Entre les branches 5 de l'étrier est disposée une seconde plaque 9, espacée au-dessus de la première et solidaire d'une console 10 elle-même solidaire de l'essieu 2 à relever.

Un vérin, qui suivant l'exemple de réalisation représenté est pneumatique et constitué par un soufflet 11 de type bien connu en matière élastomère utilisé de façon classique dans les systèmes de suspension pneumatiques des véhicules industriels, est relié entre la plaque 7 formant la semelle de l'étrier et la plaque 9 et est également relié (de façon connue, non représentée) à la centrale d'alimentation en air comprimé du véhicule.

On comprend que lorsque le soufflet est mis sous pression et complètement gonflé, il maintient l'essieu 2 en position haute telle que représentée en trait plein; l'agencement est tel que dans cette position, la plaque supérieure 9 se trouve à peu près parallèle à la plaque inférieure 7.

De préférence, mais non pas essentiellement, la semelle 7 de l'étrier est 'également reliée à une seconde console 12 articulée sur une traverse 13 par un axe 14.

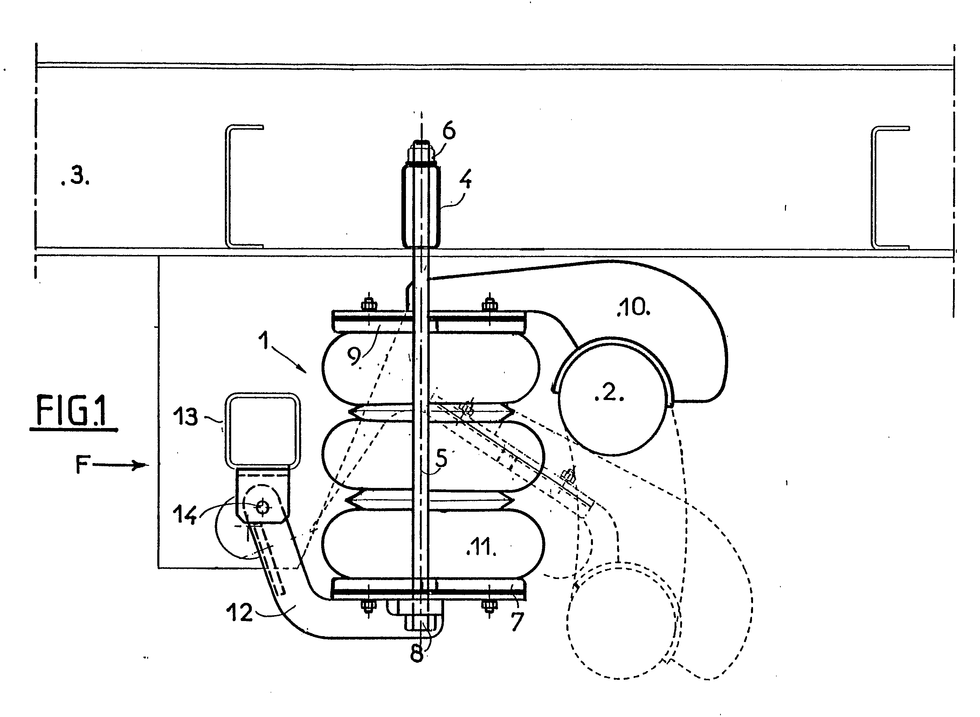

On comprend qu'en raison de l'étrier formé par les tiges 5 qui supportent la totalité du poids de l'essieu dans sa position relevée, la console 12 ne supporte aucune charge, sa fonction consistant, lorsque le soufflet est dégonflé pour abaisser l'essieu en position de route sous charge, comme représenté en trait interrompu à la figure 1, à soulager le soufflet qui prend alors une position oblique, et à guider l'oscillation de l'étrier 5.

On comprend également que suivant une variante, non représentée, les tiges 5 constituant l'étrier peuvent être remplacées par exemple par une longueur de câble en acier fixée par ses extrémités sur l'entretoise 4 ou, bien entendu, par deux longueurs de câble.

## Revendications

1. Dispositif de relevage d'essieu pour véhicule industriel, du type dans lequel un organe de levage agit entre les bras de la suspension, caractérisé en ce qu'il comprend un étrier (5) suspendu de façon flottante à une traverse (4) solidaire du châssis et portant une plaque (7) entre ses extrémités, perpendiculaire à ses branches, une console (10) solidaire de l'essieu (2) à relever et portant une seconde plaque (9) espacée au-dessus de la première et lui faisant face, entre les branches de l'étrier, et un vérin (11) disposé entre lesdites plaques (7, 9).

2. Dispositif suivant la revendication 1, caractérisé en ce qu'il comprend une seconde console (12), solidaire de la plaque (7) portée entre les branches de l'étrier (5) et articulée sur le châssis (3) de façon à osciller par rapport à celui-ci et à maintenir l'extrémité inférieure de l'étrier lorsque l'essieu (2) est abaissé à partir de sa position relevée.

3. Dispositif suivant la revendication 1, caractérisé en ce que ledit étrier est rigide et formé à partir d'une forte tige de métal (5).

4. Dispositif suivant la revendication 1, caractérisé en ce que ledit étrier (5) est souple et est constitué par un câble en acier.

5. Dispositif suivant l'une quelconque des revendications précédentes, caractérisé en ce que le vérin (11) est pneumatique et est constitué par un soufflet en matière élastomère.

**FIG.1**

F

FIG.2

EP 0 376 834 A1

Office européen
des brevets

# RAPPORT DE RECHERCHE EUROPEENNE

Numero de la demande

EP 89 40 3638

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 614 594 (SEG. S.A.) <br> * page 2, ligne 35 - page 3, ligne 19; figures * <br> --- | 1,2,4,5 | B 62 D 61/12 |
| X | CA-A- 993 462 (CHAMBERLAND) <br> * figure 1; page 4, ligne 14 - page 5, ligne 5 * <br> --- | 1,3,5 | |
| X | US-A-3 512 802 (A. LA ROCK) <br> * colonne 2, lignes 55-64; figure 2 * | 1,5 | |
| A | | 3,4 | |
| | --- | | |
| X | GB-A-2 068 855 (TURNER QUICK-LIFT) <br> * figure 1; page 2, lignes 66-95 * <br> --- | 1 | |
| D,A | EP-A-0 284 572 (OFFICINE VIBERTI) <br> * figures 3,4 * <br> ----- | 1 | |

DOMAINES TECHNIQUES RECHERCHES (Int. Cl.5)

B 62 D

Le présent rapport a été établi pour toutes les revendications

| Lieu de la recherche | Date d'achèvement de la recherche | Examinateur |
|---|---|---|
| BERLIN | 14-03-1990 | STANDRING M A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)